(19) **Europäisches Patentamt**
**European Patent Office**
**Office européen des brevets**

(11) **EP 1 736 682 B1**

(12) **EUROPÄISCHE PATENTSCHRIFT**

(45) Veröffentlichungstag und Bekanntmachung des
Hinweises auf die Patenterteilung:
**05.11.2008 Patentblatt 2008/45**

(51) Int Cl.:
***F16F 9/02*** *(2006.01)*

(21) Anmeldenummer: **06010597.0**

(22) Anmeldetag: **23.05.2006**

(54) **Längenverstellbare Gasfeder**

Lengthwise adjustable gas spring

Ressort à gaz réglable en longueur

(84) Benannte Vertragsstaaten:
**AT BE BG CH CY CZ DE DK EE ES FI FR GB GR
HU IE IS IT LI LT LU LV MC NL PL PT RO SE SI
SK TR**

(30) Priorität: **24.06.2005 DE 102005029467**

(43) Veröffentlichungstag der Anmeldung:
**27.12.2006 Patentblatt 2006/52**

(73) Patentinhaber: **SUSPA Holding GmbH
90518 Altdorf (DE)**

(72) Erfinder:
• **Knaust, Holger
92245 Kümmersbruck (DE)**
• **Schmidbauer, Michael
92256 Hahnbach (DE)**

(74) Vertreter: **Rau, Manfred et al
Rau, Schneck & Hübner
Patentanwälte
Königstrasse 2
90402 Nürnberg (DE)**

(56) Entgegenhaltungen:
**EP-A- 1 403 549          DE-A1- 10 163 996**

**Beschreibung**

Die Erfindung betrifft eine längenverstellbare Gasfeder, deren Verstell-Ventil von außen geöffnet bzw. geschlossen werden kann, wobei in geöffnetem Zustand die Kolbenstange in das Gehäuse eingefahren bzw. aus dieser herausgefahren werden kann, wodurch Längenverstellungen der Gasfeder vorgenommen werden. Bei geschlossenem Verstell-Ventil ist die Gasfeder in dieser eingestellten Position der Kolbenstange relativ zum Gehäuse blockiert. Insbesondere wenn der Kolben der Gasfeder in einem mit Hydraulik-Öl gefüllten Innenraum verschiebbar ist, ist die Gasfeder gegen Druckkräfte starr blockierbar.

Es ist eine große Zahl derartiger längenverstellbarer Gasfedern bekannt, die zusätzliche Funktionen aufweisen, beispielsweise eine Überlastsicherung, bei der das Verstell-Ventil bei unzulässig hohen Kräften zwischen Kolbenstange und Gehäuse öffnet.

Bei der Anwendung derartiger längenverstellbarer Gasfedern, und zwar insbesondere starr blockierbarer, also - wie erwähnt - mit Hydraulik-Öl gefüllter Gasfedern in Tischen, schwenkbaren Kopflehnen von Krankenhausbetten, Beistelltischen in Krankenhäusern etc., besteht der Wunsch, eine Vergrößerung der Länge der Gasfeder herbeiführen zu können, ohne das Verstell-Ventil betätigen zu müssen.

Bei einer aus der EP 1 403 549 A2 bekannten längenverstellbaren Gasfeder nach dem Oberbegriff des Patentanspruchs 1 ist im Kolben ein automatisches Ventil zum Miteinander-Verbinden der Teil-Innenräume bekannt, wobei eine Automatik-Überströmverbindung vorgesehen ist, welche ein in einer Schließstellung vorgespanntes Ventilelement aufweist. Dieses ist so ausgestaltet, dass ein Öffnen des automatischen Ventils in einer Offenstellung erst dann erfolgt, wenn zwischen der Kolbenstange und dem Gehäuse eine Überwindungs-Kraft $F_1$ in einer Kolbenstangen-Ausschubrichtung sich zu einer Ausschub-Kraft $F_2$ folgendermaßen verhält:

$$- 2\,F_2 < F_1 < 2\,F_2.$$

Die Ausschub-Kraft $F_2$ wirkt hierbei durch den Druck des Druck-Mediums zwischen der Kolbenstange und dem Gehäuse in den Teil-Innenräumen in Kolbenstangen-Ausschubrichtung, und zwar in der Offenstellung des Ventil-Stifts des Verstell-Ventils.

Aus der DE 101 63 996 A1 ist eine längenverstellbare Gasfeder bekannt, die zugeordnet zu dem im Kolben angeordneten Verstell-Ventil eine Überlastsicherung aufweist. Diese öffnet bei einer extremen Überlast auf die Kolbenstange in das Gehäuse hinein, indem der Ventilsitz, gegen den der Ventil-Stift bei geschlossenem Ventil anliegt, aus seiner Ruhelage gegen eine starke Federkraft abgehoben wird.

Der Erfindung liegt daher die Aufgabe zugrunde, eine längenverstellbare Gasfeder der allgemeinen Gattung mit einem betätigbaren Verstell-Ventil so auszugestalten, dass bei Ausüben einer relativ leichten Zugkraft ein zügiges Ausfahren der Kolbenstange aus dem Gehäuse stattfindet.

Diese Aufgabe wird erfindungsgemäß durch die Merkmale des Anspruches 1 gelöst. Durch die erfindungsgemäßen Maßnahmen wird ein zusätzliches Ventil, nämlich ein Zug-Ventil, in die Gasfeder integriert, das bei Ausüben einer leichten Zugkraft öffnet. Eine Tischplatte, eine Kopflehne eines Bettes, ein Beistelltisch in einem Krankenhaus etc. können also mit einer leichten Handbewegung angehoben werden; wenn diese leichte Zugkraft auf die Gasfeder beendet wird, wird diese Ausfahrbewegung sofort wieder gestoppt und das Zug-Ventil schließt selbsttätig. Das Verstell-Ventil selber bleibt hierbei durchgehend geschlossen.

Die Unteransprüche geben zahlreiche vorteilhafte Ausgestaltungen wieder.

Weitere Merkmale, Vorteile und Einzelheiten der Erfindung ergeben sich aus der nachfolgenden Beschreibung eines Ausführungsbeispieles anhand der Zeichnung. Es zeigt

Fig. 1    einen Längsschnitt durch eine Gasfeder nach der Erfindung,

Fig. 2    eine Teil-Vergrößerung aus Fig. 1, die den Kolben mit dem Verstell-Ventil und dem Zug-Ventil in jeweils geschlossenem Zustand zeigt,

Fig. 3    eine Darstellung entsprechend Fig. 2 mit geöffnetem Verstell-Ventil und geschlossenem Zug-Ventil,

Fig. 4    eine Darstellung entsprechend den Fig. 2 und 3 mit geöffnetem Zug-Ventil und geschlossenem Verstell-Ventil und

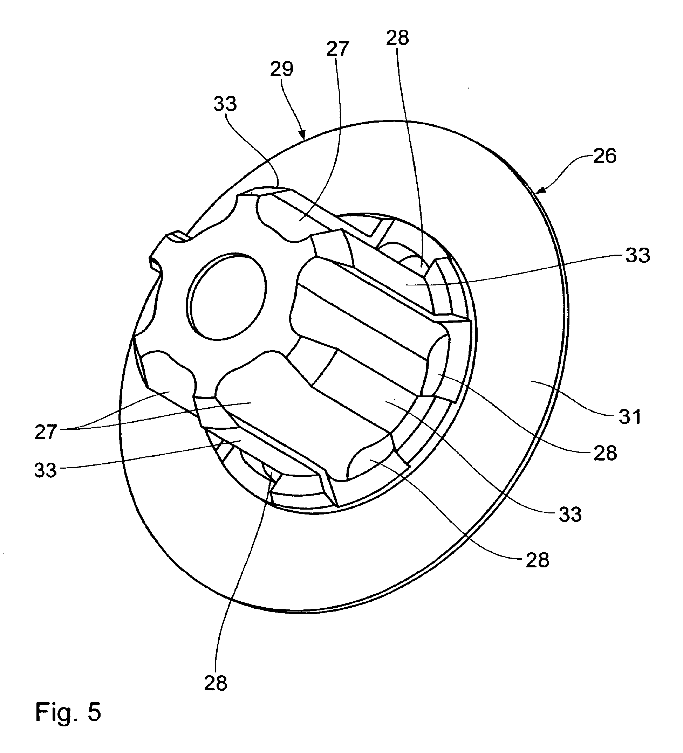

Fig. 5    eine perspektivische Darstellung einer Schiebe-Büchse des Verstell-Ventils und des Zug-Ventils.

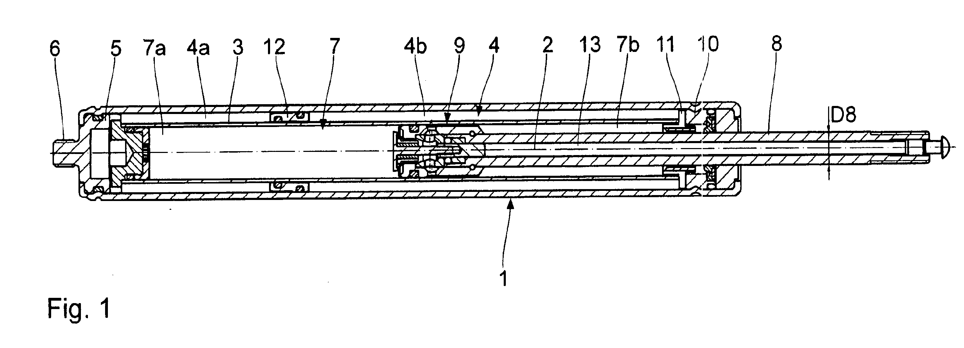

Die in Fig. 1 dargestellte längenverstellbare Gasfeder weist ein zylindrisches Gehäuse 1 mit einer Mittel-Längs-Achse 2 auf. Konzentrisch zur Achse 2 ist im Gehäuse 1 ein Innen-Zylinder 3 angeordnet, zwischen dem und dem Gehäuse 1 ein ringzylindrischer Ringraum 4 ausgebildet ist. Die Gasfeder ist an einem Ende mittels eines Bodens 5 gas- und flüssigkeitsdicht verschlossen. An der Außenseite des Bodens 5 ist ein durch einen Gewindezapfen 6 gebildetes Befestigungselement ausgebildet. Der Innen-Zylinder 3 ist mit dem mehrteilig ausgebildeten Boden 5 ebenfalls gas- und flüssigkeitsdicht verbunden, sodass in diesem Bereich der Ringraum 4 und der im Innen-Zylinder 3 ausgebildete Innenraum 7 gas- und flüssigkeitsdicht voneinander getrennt sind.

Im Innen-Zylinder 3 ist ein an einer Kolbenstange 8 angebrachter Kolben 9 angeordnet. Die Kolbenstange 8 ist durch eine dem Boden 5 entgegengesetzt angeordnete Führungs- und Dichtungs-Einheit 10 aus dem Gehäuse 1 der Gasfeder herausgeführt. Die Führungs- und Dichtungs-Einheit 10 ist in üblicher Weise gegenüber dem Gehäuse 1 und gegenüber der Kolbenstange 8 abgedichtet. In der Führungs- und Dichtungs-Einheit 10 ist ein den Ringraum 4 und den Innenraum 7 miteinander verbindender Verbindungs-Kanal 11 ausgebildet. Im Ringraum 4 ist ein ringförmiger Trenn-Kolben 12 verschiebbar angeordnet, der gegenüber dem Gehäuse 1 und gegenüber dem Innen-Zylinder 3 abgedichtet ist. Er unterteilt den Ringraum 4 in einen dem Boden 5 benachbarten, mit Druckgas gefüllten Teil-Ringraum 4a und einen der Führungs- und Dichtungs-Einheit 10 benachbarten, mit Hydraulik-Öl gefüllten Teil-Ringraum 4b. Der Kolben 9 unterteilt den Innenraum 7 des Innen-Zylinders 3 in einen dem Boden 5 benachbarten Teil-Innenraum 7a und einen der Führungs- und Dichtungs-Einheit 10 benachbarten Teil-Innenraum 7b. Der Innenraum 7 ist gleichermaßen wie der Teil-Ringraum 4b mit Hydraulik-Öl gefüllt.

Die Kolbenstange 8 ist rohrförmig, also hohl ausgebildet; in ihr ist eine vom äußeren Ende her in Richtung der Achse 2 verschiebbare Betätigungs-Stange 13 angeordnet. Der Kolben 9 ist mit einem Doppel-Ventil versehen. Er weist ein etwa rohrförmiges Ventil-Gehäuse 14 auf, das auf der Kolbenstange 8 mittels eines Sprengrings 15 in Richtung der Achse 2 festgelegt ist.

Im Kolben 9 ist ein Überström-Raum 16 ausgebildet, der mit dem Teil-Innenraum 7b mittels radial zur Achse 2 verlaufender Überström-Kanäle 17 dauerhaft verbunden ist. Der Kolben 9 ist mittels einer Ring-Dichtung 18 gegenüber der Innenwand 19 des Innen-Zylinders 3 abgedichtet. Diese Ring-Dichtung 18 befindet sich auf dem zwischen den Überström-Kanälen 17 und dem Teil-Innenraum 7a befindlichen Bereich des Kolbens 9, sodass durch diese Ring-Dichtung 18 zum einen die Teil-Innenräume 7a und 7b flüssigkeitsdicht voneinander getrennt sind, andererseits aber über die Überström-Kanäle 17 und den Überström-Raum 16 eine Verbindung der beiden Teil-Innenräume 7a und 7b in noch zu schildernder Weise möglich ist.

Im Ventil-Gehäuse 14 ist ein Ventil-Stift 20 in Richtung der Achse 2 verschiebbar angeordnet, der einerseits gegen das in der Kolbenstange 8 befindliche Ende der Betätigungsstange 13 anliegt und der andererseits an seinem entgegengesetzten Ende mit einem Ventil-Teller 21 versehen ist. Der Ventil-Stift 20 ist in der Kolbenstange 8 radial zur Achse 2 in einer Führungsbüchse 22 geführt und mittels einer Ring-Dichtung 23 abgedichtet, sodass aus dem Innenraum 7 kein Hydraulik-Öl durch die hohle Kolbenstange 8 nach außen abströmen kann.

Der Ventil-Teller 21 weist an seinem äußeren Rand einen dem Kolben 9 zugewandten ringförmigen ersten Dicht-Sitz 24 auf. Diesem ersten Dicht-Sitz 24 ist eine erste Dicht-Fläche 25 als erste Dicht-Anlage zugeordnet, die an einer Schiebe-Büchse 26 angebracht ist. Diese Schiebe-Büchse 26 ist auf dem Ventil-Stift 20 in Richtung der Achse 2 verschiebbar geführt. Sie weist an ihrem Außenumfang parallel zur Achse 2 verlaufende Durchström-Kanäle 27 auf, die einerseits radial nach außen offen sind und andererseits durch Durchström-Öffnungen 28 in den Bereich innerhalb des ringförmigen ersten Dicht-Sitzes 24 des Ventil-Tellers 21 münden. In diesem Bereich der Durchström-Öffnung 28 ist die Schiebe-Büchse 26 mit einer sich radial erstreckenden Ventil-Scheibe 29 versehen, die auf ihren beiden Stirnseiten aus einem Abdicht-Werkstoff besteht. Beispielsweise ist die Ventil-Scheibe 29 als Stahlscheibe ausgebildet, die auf ihren beiden Stirnseiten mit einer Gummischicht 30 bzw. 31 versehen ist. Die Gummi-Schicht 30 bildet die erste Dicht-Fläche 25.

An der der Ventil-Scheibe 29 zugewandten Stirnseite des Ventil-Gehäuses 14 ist ein ringförmiger zweiter Dicht-Sitz 32 ausgebildet, gegen den die Ventil-Scheibe 29 mit ihrer Gummi-Schicht 31 als zweiter Dicht-Fläche, also als zweiter Dicht-Anlage, anliegen kann. Dieser zweite Dicht-Sitz 32 befindet sich konstruktiv so nah wie möglich an der Innenwand 19 des Innen-Zylinders 3.

Die Durchström-Kanäle 27 sind mittels sich radial zur Achse 2 erstreckender Führungs-Rippen 33 voneinander getrennt. Mittels dieser Rippen 33 ist die Schiebe-Büchse 26 in einer zylindrischen Bohrung 34 des Ventil-Gehäuses 14 in Richtung der Achse 2 verschiebbar geführt. Diese zylindrische Bohrung 34 ist wiederum mit dem Überström-Raum 16 verbunden. Die Durchström-Kanäle 27 münden radial zur Achse 2 in den zweiten Ventil-Raum 35, der durch die Ventil-Scheibe 29 mit ihrer Gummi-Schicht 31, den ringförmigen zweiten Dicht-Sitz 32 und das Ventil-Gehäuse 14 begrenzt wird. Die Durchström-Kanäle 27 münden durch die Durchström-Öffnung 28 in einen ersten Ventil-Raum 36, der durch den Ventil-Teller 21, dessen ersten ringförmigen Dicht-Sitz 24, die erste Dicht-Fläche 25 und die Schiebe-Büchse 26 begrenzt wird.

Der Ventil-Stift 20 mit Ventil-Teller 21 und der zugeordneten Betätigungs-Stange 13, die Ventil-Scheibe 29 mit ihrer Gummi-Schicht 30 und die Durchström-Kanäle 27 mit ihren Durchström-Öffnungen 28 und der Überström-Raum 16 mit den Überström-Kanälen 17 bilden ein Verstell-Ventil 37. Die Schiebe-Büchse 26 mit ihren sich radial öffnenden Durchström-Kanälen 27, die Ventil-Scheibe 29 mit ihrer Gummi-Schicht 31 als zweiter Dicht-Fläche, der zweite Dicht-Sitz 32 und der Überström-Raum 16 mit den Überström-Kanälen 17 bilden ein Zug-Ventil 38.

Der erste Dicht-Sitz 24 hat einen Durchmesser $D_{24}$; der zweite Dicht-Sitz 32 hat einen Durchmesser $D_{32}$. Die Kolbenstange 8 hat einen Außendurchmesser $D_8$; die Innenwand 19 des Innen-Zylinders 3 hat einen Innendurchmesser $D_{19}$. Wie bereits erwähnt, ist $D_{32}$ so groß wie möglich, d. h. $D_{32}$ ist nur unwesentlich kleiner als $D_{19}$. Es muss nur sichergestellt sein, dass bei geöffnetem Zug-Ventil 38 zwischen der Ventil-Scheibe 29 und der Innenwand 19 des Innen-Zylinders 3 ein für eine Flüssigkeitsdurchströmung ausreichend großer Spalt 39 vorhanden ist. Für den Durchmesser der Ventil-Scheibe 29 gilt also: $D_{19} > D_{29} > D_{32}$. Es gilt weiterhin: $D_{24} < D_{32}$. Grundsätzlich könnten die Dicht-Sitze 24, 32 auch an der Schiebe-Büchse 26 und die Dicht-Flächen 25, 31 am Ventil-Teller 21 bzw. am Ventil-Gehäuse 14 ausgebildet sein.

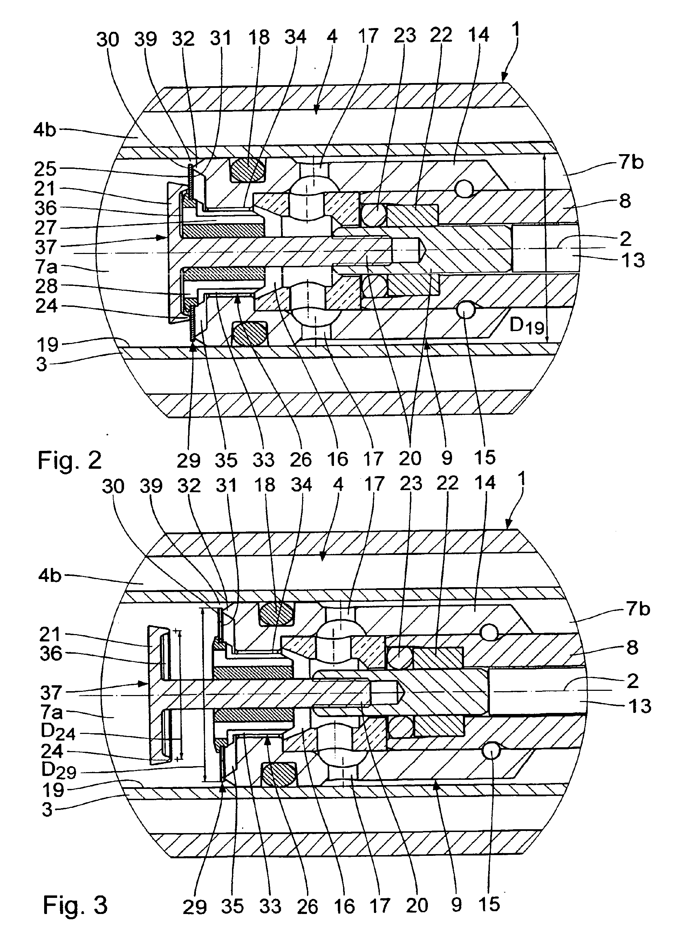

Die Wirkungsweise des geschilderten Doppel-Ventils ergibt sich aus den Fig. 2 bis 4. Bei gemäß Fig. 2 geschlossenem Verstell-Ventil 37 und geschlossenem Zug-Ventil 38 kann kein Hydraulik-Öl aus dem Teil-Innenraum 7a in den Teil-Innenraum 7b und umgekehrt fließen. Der Kolben 9 mit der Kolbenstange 8 ist relativ zum Gehäuse 1 in Richtung der Achse 2 festgelegt. Die Gasfeder ist in ihrer Längeneinstellung blockiert. Eine am äußeren Ende der Kolbenstange 8 angreifende, zum Gehäuse 1 hin gerichtete Kraft bewirkt also kein Zusammenschieben der Gasfeder. Der Ventil-Teller 21 liegt hierbei mit seinem ersten Dicht-Sitz 24 dichtend an der Gummi-Schicht 30 der Ventil-Scheibe 29 an. Die Ventil-Scheibe 29 liegt hierbei mit ihrer Gummi-Schicht 31 am zweiten Dicht-Sitz 32 dicht an. Beide Ventile 37, 38 sind also geschlossen.

Wenn die Betätigungs-Stange 13 in die Kolbenstange 8 hineingeschoben wird, dann verschiebt sie den Ventil-Stift 20 mit dem Ventil-Teller 21 in Richtung zum Teil-Innenraum 7a, wodurch das Verstell-Ventil 37 geöffnet wird. Der erste Dicht-Sitz 24 hebt nämlich von der Gummi-Schicht 30 der Ventil-Scheibe 29 ab, sodass Hydraulik-Öl vom Teil-Innenraum 7b durch die Überström-Kanäle 17, den Überström-Raum 16, die Durchström-Kanäle 27, die Durchström-Öffnungen 28 und den ersten Ventil-Raum 36 in den Teil-Gehäuseraum 7a und umgekehrt strömen kann. Die Gasfeder kann unter entsprechender Strömung von Hydraulik-Öl aus dem Teil-Innenraum 7a in den Teil-Innenraum 7b und umgekehrt in ihrer Länge verstellt werden. Beim Einschieben der Kolbenstange 8 in das Gehäuse 1 hinein wird Hydraulik-Öl aus dem Innenraum 7 verdrängt und in den Teil-Innenraum 7b gedrückt, wodurch der Trenn-Kolben 12 unter entsprechender Verkleinerung des Teil-Innenraums 7a in Richtung zum Boden 5 verschoben wird. Beim Ausfahren der Kolbenstange 8 aus dem Gehäuse 1 erfolgt ein umgekehrter Fluss von Hydraulik-Öl. Die Summe der Querschnitte der Durchström-Kanäle 27 und der Durchström-Öffnungen 28 ist so groß wie möglich, damit bei der Verstell-Bewegung möglichst keine bzw. nur geringe Dämpfungskräfte auftreten. Beim geschilderten Öffnen des Verstell-Ventils 37 bleibt die Schiebe-Büchse 26 in ihrer in den Fig. 2 und 3 dargestellten Position in der zylindrischen Bohrung 34 des Ventil-Gehäuses 14, d. h. das Zug-Ventil 38 bleibt zumindest beim Einfahren der Kolbenstange 8 geschlossen.

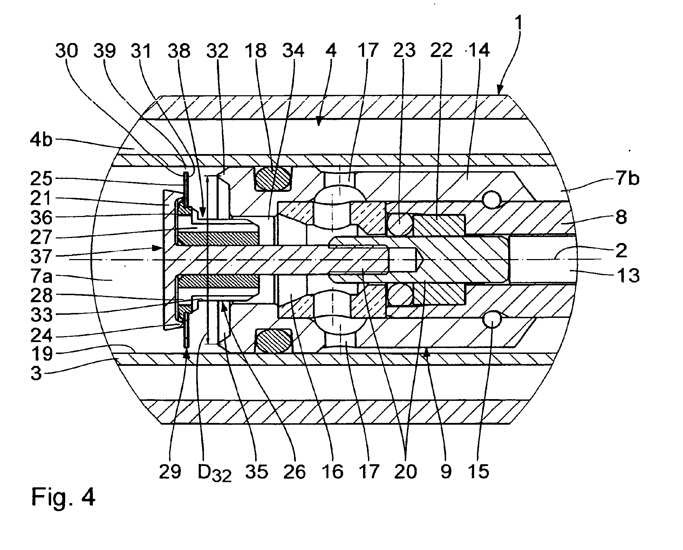

Wenn bei geschlossenem Verstell-Ventil 37 eine Zug-Kraft auf die Kolbenstange 8 relativ zum Gehäuse 1 ausgeübt wird, wenn also eine Zug-Kraft zwischen Gehäuse 1 und Kolbenstange 8 wirkt, die auf ein Ausfahren der Kolbenstange 8 aus dem Gehäuse 1 gerichtet ist, dann führt dies zu einer Druckerhöhung im Teil-Innenraum 7b. Dieser Druck wirkt zum einen innerhalb des ersten Dicht-Sitzes 24 auf den Ventil-Teller 21 in Richtung zum Teil-Innenraum 7a und zum anderen auf die Ventil-Scheibe 29 innerhalb des zweiten Dicht-Sitzes 32 und damit auf die Schiebe-Büchse 26. Für die insoweit vom Hydraulik-Öl beaufschlagt wirksame Fläche $F_{37}$ gilt: $F_{37} = (D^2_{24} - D^2_8) \times \pi/4$. Für die wirksame Fläche des Zug-Ventils $F_{38}$ gilt: $F_{38} = (D^2_{32} - D^2_8) \times \pi/4$. Da $D_{32} > D_{24}$ gilt, ist die auf die Schiebe-Büchse 26 mit der Ventil-Scheibe 29 in Richtung zum Teil-Innenraum 7a wirkende Kraft größer als die auf den Ventil-Teller 21 wirkende Kraft. Das Zug-Ventil 38 wird also geöffnet, sodass Hydraulik-Öl vom Teil-Innenraum 7b durch die Überström-Kanäle 17, den Überström-Raum 16, die Durchström-Kanäle 27 der Schiebe-Büchse 26, den zweiten Ventil-Raum 35 über den zweiten Dicht-Sitz 32 und den Spalt 39 in den Teil-Innenraum 7a strömen kann. Wenn also eine entsprechend kleine Zugkraft auf die Kolbenstange 8 ausgeübt wird, öffnet das Zug-Ventil 38; die Kolbenstange 8 wird aus dem Gehäuse 1 durch den Druck des Gases im Teil-Ringraum 4a ausgeschoben. Die Größe der erforderlichen Kraft ergibt sich aus der Dimensionierung von $F_{37}$ und $F_{38}$ und den Druck des Gases im Teil-Ringraum 4a. Die Ausschub-Bewegung wird sofort beendet, wenn die erwähnte kleine Zugkraft nicht weiter ausgeübt wird. Wie Fig. 4 erkennen lässt, wird die Schiebe-Büchse 26 nicht so weit verschoben, dass sie aus der zylindrischen Bohrung 34 austritt; sie wird auch bei geöffnetem Zug-Ventil 38 in dieser Bohrung 34 geführt.

**Patentansprüche**

1. Längenverstellbare Gasfeder

    - mit einem mit einem flüssigen Druck-Medium gefüllten, eine Mittel-Längs-Achse (2) aufweisenden Gehäuse (1),
    - mit einer das Gehäuse (1) an einem ersten Ende abschließenden Führungs- und Dichtungs-Einheit (10),
    - mit einer abgedichtet durch die Führungs- und Dichtungs-Einheit (10) aus dem ersten Ende des Gehäuses (1) herausgeführten Kolbenstange (8),
    - mit einem mit der Kolbenstange (8) verbundenen, im Gehäuse (1) abgedichtet geführten Kolben (9),
    - mit einem zwischen dem Kolben (9) und der Führungs- und Dichtungs-Einheit (10) gebildeten ersten Teil-Innenraum (7b),
    - mit einem durch den Kolben (9) begrenzten, dem ersten Teil-Innenraum (7b) abgewandten zweiten Teil-Innenraum (7a),
    - mit einem im Kolben (9) angeordneten Verstell-Ventil (37) zum Miteinander-Verbinden des ersten und zweiten Teil-Innenraums (7a, 7b), das

- -- einen in Richtung der Mittel-Längs-Achse (2) verschiebbaren Ventil-Stift (20) und
- -- einen am Ventil-Stift (20) angebrachten Ventil-Teller (21) aufweist

und

- mit einem am Kolben (9) angeordneten Zug-Ventil (38) zum Miteinander-Verbinden des ersten und zweiten Teil-Innenraums (7a, 7b) bei Aufbringen einer Zugkraft zwischen Kolbenstange (8) und Gehäuse (1), **dadurch gekennzeichnet,**
- **dass** das Verstell-Ventil (37)

- -- einen ersten Dicht-Sitz (24) und
- -- eine mit dem ersten Dicht-Sitz (24) zusammenwirkende erste Dicht-Anlage aufweist,
- -- wobei der erste Dicht-Sitz (24) und die erste Dicht-Anlage mittels des Ventil-Stiftes (20) voneinander abhebbar sind,

und

- **dass** das Zug-Ventil (38)

- -- einen zweiten Dicht-Sitz (32) und
- -- eine mit dem zweiten Dicht-Sitz (32) zusammenwirkende zweite Dicht-Anlage aufweist,
- -- wobei der zweite Dicht-Sitz (32) und die zweite Dicht-Anlage bei einer Erhöhung des Drucks im ersten Teil-Innenraum (7b) unter Öffnen des Zug-Ventils (38) voneinander abhebbar sind,

und

- **dass** das Verstell-Ventil (37) und das Zug-Ventil (38) eine gemeinsame Schiebe-Büchse (26) aufweisen,

- -- die auf dem Ventil-Stift (20) in Richtung der Mittel-Längs-Achse (2) verschiebbar geführt ist und
- -- die eine Ventil-Scheibe (29) trägt, an der die erste Dicht-Anlage und die zweite Dicht-Anlage ausgebildet sind.

2. Gasfeder nach Anspruch 1, **dadurch gekennzeichnet,** **dass** das Verstell-Ventil (37) in geschlossenem Zustand eine mit dem ersten Teil-Innenraum (7b) in Verbindung stehende Fläche $F_{37}$ aufweist, **dass** das Zug-Ventil (38) in geschlossenem Zustand eine mit dem ersten Teil-Innenraum (7b) in Verbindung stehende Fläche $F_{38}$ aufweist und

**dass** gilt: $F_{38} > F_{37}$.

3. Gasfeder nach Anspruch 1, **dadurch gekennzeichnet,** **dass** die Schiebe-Büchse (26) Durchström-Kanäle (27) trägt, die dem Verstell-Ventil (37) und dem Zug-Ventil (38) zugeordnet sind.

4. Gasfeder nach Anspruch 1, **dadurch gekennzeichnet,** **dass** die Ventil-Scheibe (29) beidseitig Dicht-Werkstoff aufweist.

5. Gasfeder nach Anspruch 1, **dadurch gekennzeichnet,** **dass** zwischen der Ventil-Scheibe (29) und einer die Teil-Innenräume (7a, 7b) begrenzenden Innenwand (19) nur ein Spalt (39) ausgebildet ist.

6. Gasfeder nach Anspruch 1, **dadurch gekennzeichnet,** **dass** der erste Dicht-Sitz (24) kreisringförmig ausgebildet ist und einen Durchmesser $D_{24}$ aufweist und **dass** der zweite Dicht-Sitz (32) kreisringförmig ausgebildet ist und einen Durchmesser $D_{32}$ aufweist und **dass** gilt: $D_{32} > D_{24}$.

7. Gasfeder nach Anspruch 1, **dadurch gekennzeichnet,** **dass** ein mit Druckgas gefüllter Ausgleichsraum vorgesehen ist, der mit einem der Teil-Innenräume (7b) verbunden ist.

8. Gasfeder nach Anspruch 7, **dadurch gekennzeichnet,** **dass** die Teil-Innenräume (7a, 7b) in einem Innen-Zylinder (3) ausgebildet sind, der konzentrisch zur Mittel-Längs-Achse (2) von einem Gehäuse (1) umgeben ist, **dass** ein zwischen dem Gehäuse (1) und dem Innen-Zylinder (3) ausgebildeter Ringraum (4) durch einen Trenn-Kolben (12) in einen mit Druckgas gefüllten Teil-Ringraum (4a) und einen mit flüssigem Druck-Medium gefüllten Teil-Ringraum (4b) unterteilt ist, und **dass** der mit Druck-Medium gefüllte Teil-Ringraum (4b) über einen Verbindungs-Kanal (11) mit dem ersten Teil-Innenraum (7b) ständig verbunden ist.

**Claims**

1. Adjustable-length gas spring, comprising

- a casing (1) which has a central longitudinal axis (2) and is filled with a liquid pressure fluid;
- a guide and seal unit (10) which closes the casing (1) at a first end;

- a piston rod (8) for sealed guidance through the guide and seal unit (10) out of the first end of the casing (1);
- a piston (9) for sealed guidance in the casing (1), the piston (9) being joined to the piston rod (8);
- a first divisional interior chamber (7b) which is formed between the piston (9) and the guide and seal unit (10);
- a second divisional interior chamber (7a) which is defined by the piston (9) and turned away from the first divisional interior chamber (7b);
- an adjusting valve (37) which is disposed in the piston (9) and interconnects the first and second divisional interior chamber (7a, 7b), having

   -- a valve control pin (20) which is displaceable in a direction of the central longitudinal axis (2),
   -- a valve tray (21) which is mounted on the valve control pin (20), and

- a traction valve (38), which is disposed on the piston (9), for interconnection of the first and second divisional interior chamber (7a, 7b) when tractive force acts between the piston rod (8) and the casing (1), **characterized**
- **in that** the adjusting valve (37) comprises

   -- a first sealing seat (24), and
   -- a first sealing contact surface which cooperates with the first sealing seat (24),
   -- the first sealing seat (24) and the first sealing contact surface being liftable off each other by means of the valve control pin (20);

and
- **in that** the traction valve (38) comprises

   -- a second sealing seat (32), and
   -- a second sealing contact surface that cooperates with the second sealing seat (32),
   -- the second sealing seat (32) and the second sealing contact surface, upon increase of pressure in the first divisional interior chamber (7b), being liftable off each other while the traction valve (38) opens;

and
- **in that** the adjusting valve (37) and the traction valve (38) comprise a joint sliding bush (26)

   -- which is guided for displacement on the valve control pin (20) in the direction of the central longitudinal axis (2) and
   -- which bears supports a valve disk (29) on which the first sealing contact surface and the second sealing contact surface are formed.

2. Gas spring according to claim 1, **characterized in that** the adjusting valve (37), when shut off, has a surface $F_{37}$ which is in connection with the first divisional interior chamber (7b);
   **in that** the traction valve (38), when shut off, has a surface $F_{38}$ which is in connection with the first divisional interior chamber (7b); and
   **in that** $F_{38} > F_{37}$ applies.

3. Gas spring according to claim 1, **characterized in that** the sliding bush (26) has passages (27) which are allocated to the adjusting valve (37) and the traction valve (38).

4. Gas spring according to claim 1, **characterized in that** the valve disk (29) comprises sealing material on both sides.

5. Gas spring according to claim 1, **characterized in that** only one gap (39) is formed between the valve disk (29) and an inside wall (19) that defines the divisional interior chambers (7a, 7b).

6. Gas spring according to claim 1, **characterized in that** the first sealing seat (24) has the shape of a circular ring and a diameter $D_{24}$; and
   **in that** the second sealing seat (32) has the shape of a circular ring and a diameter $D_{32}$; and
   **in that** $D_{32} > D_{24}$ applies.

7. Gas spring according to claim 1, **characterized in that** an equalization chamber is provided, which is filled with compressed gas and connected to one of the divisional interior chambers (7b).

8. Gas spring according to claim 7, **characterized in that** the divisional interior chambers (7a, 7b) are formed in an internal cylinder (3) which, concentrically of the central longitudinal axis (2), is enveloped by a casing (1);
   **in that** an annular chamber (4), which is formed between the casing (1) and the internal cylinder (3), is divided by a dividing piston (12) into a divisional annular chamber (4a) filled with compressed gas and a divisional annular chamber (4b) filled with liquid pressure fluid; and
   **in that** the divisional annular chamber (4b), which is filled with pressure fluid, is permanently connected to the first divisional interior chamber (7b) via a connecting conduit (11).

**Revendications**

1. Ressort à gaz réglable en longueur

- avec un boîtier (1) rempli d'un agent liquide sous pression et présentant un axe longitudinal médian (2),

- avec une unité de guidage et d'étanchéification (10) terminant le boîtier (1) au niveau d'une première extrémité,

- avec une tige de piston (8) sortie de la première extrémité du boîtier (1) rendue étanche par l'unité de guidage et d'étanchéification (10),

- avec un piston (9) guidé de manière étanche dans le boîtier (1) et relié à la tige de piston (8),

- avec une première partie d'espace intérieur (7b) formée entre le piston (9) et l'unité de guidage et d'étanchéification (10),

- avec une deuxième partie d'espace intérieur (7a) opposée à la première partie d'espace intérieur (7b) et délimitée par le piston (9),

- avec une soupape de réglage (37) agencée dans le piston (9) permettant de relier ensemble la première et la deuxième partie d'espace intérieur (7a, 7b), qui présente

- une tige de soupape (20) pouvant être déplacée en direction de l'axe longitudinal médian (2) et

- une tête de soupape (21) montée sur la tige de soupape (20) et

- avec une soupape de traction (38) agencée au niveau du piston (9) permettant de relier ensemble la première et la deuxième partie d'espace intérieur (7a, 7b) lors de l'application d'une force de traction entre la tige de piston (8) et le boîtier (1),

**caractérisé en ce que**

- la soupape de réglage (37) présente

- un premier siège d'étanchéité (24) et

- un premier appui d'étanchéité coopérant avec le premier siège d'étanchéité (24),

- le premier siège d'étanchéité (24) et le premier appui d'étanchéité pouvant être soulevés l'un de l'autre au moyen de la tige de soupape (20), et

- **en ce que** la soupape de traction (38) présente

- un deuxième siège d'étanchéité (32) et

- un deuxième appui d'étanchéité coopérant avec le deuxième siège d'étanchéité (32),

- le deuxième siège d'étanchéité (32) et le deuxième appui d'étanchéité pouvant être soulevés l'un de l'autre lors d'une augmentation de la pression dans la première partie d'espace intérieur (7b) par ouverture de la soupape de traction (38), et

- **en ce que** la soupape de réglage (37) et la soupape de traction (38) présentent une douille coulissante (26) commune,

- qui est guidée sur la tige de soupape (20) en direction de l'axe longitudinal médian (2) et

- qui porte un disque de soupape (29), au niveau duquel sont réalisés le premier appui d'étanchéité et le deuxième appui d'étanchéité.

2. Ressort à gaz selon la revendication 1, **caractérisé en ce que** la soupape de réglage (37) présente à l'état fermé une surface $F_{37}$ en contact avec la première partie d'espace intérieur (7b),

**en ce que** la soupape de traction (38) présente à l'état fermé une surface $F_{38}$ en contact avec la première partie d'espace intérieur (7b) et

**en ce que** $F_{38} > F_{37}$.

3. Ressort à gaz selon la revendication 1, **caractérisé en ce que** la douille coulissante (26) porte des canaux d'écoulement (27), qui sont affectés à la soupape de réglage (37) et à la soupape de traction (38).

4. Ressort à gaz selon la revendication 1, **caractérisé en ce que** le disque de soupape (29) présente de part et d'autre un matériau d'étanchéité.

5. Ressort à gaz selon la revendication 1, **caractérisé en ce que** seule une fente (39) est réalisée entre le disque de soupape (29) et une paroi intérieure (19) délimitant les parties d'espace intérieur (7a, 7b).

6. Ressort à gaz selon la revendication 1, **caractérisé en ce que** le premier siège d'étanchéité (24) est réalisé sous forme circulaire et présente un diamètre $D_{24}$ et

**en ce que** le deuxième siège d'étanchéité (32) est réalisé sous forme circulaire et présente un diamètre $D_{32}$ et

**en ce que** $D_{32} > D_{24}$.

7. Ressort à gaz selon la revendication 1, **caractérisé en ce qu'**il est prévu un espace d'équilibrage rempli de gaz sous pression, qui est relié à une des parties d'espace intérieur (7b).

8. Ressort à gaz selon la revendication 7, **caractérisé en ce que** les parties d'espace intérieur (7a, 7b) sont réalisées dans un cylindre intérieur (3), qui est entouré par un boîtier (1) de manière concentrique par rapport à l'axe longitudinal médian (2),

**en ce qu'**un espace annulaire (4) réalisé entre le boîtier (1) et le cylindre intérieur (3) est subdivisé par un piston de séparation (12) en une partie d'espace annulaire (4a) remplie de gaz sous pression et une partie d'espace annulaire (4b) remplie d'un agent liquide sous pression, et

**en ce que** la partie d'espace annulaire (4b) remplie d'un agent liquide sous pression est reliée en permanence à la première partie d'espace intérieur (7b) par le biais d'un canal de liaison (11).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1403549 A2

- DE 10163996 A1